# EUROPEAN PATENT APPLICATION

(11) **EP 4 465 229 A1**
(43) Date of publication of application: **20.11.2024**
(21) Application number: 24150235.0
(22) Date of filing: 03.01.2024
(51) Int. Cl.: G06Q 30/04, H04W 4/24

(54) **NETWORK NODE, INFORMATION PROCESSING SYSTEM, INFORMATION PROCESSING METHOD, AND NON-TRANSITORY STORAGE MEDIUM**

(30) Priority: 15.05.2023 JP 2023079912
(71) Applicant: TOYOTA JIDOSHA KABUSHIKI KAISHA, Toyota-shi, Aichi-ken, 471-8571 (JP)
(72) Inventor: SHAO, Xiao, Toyota-shi, Aichi-ken, 471-8571 (JP); OKADA, Kazuya, Toyota-shi, Aichi-ken, 471-8571 (JP); KANEKO, Naoya, Toyota-shi, Aichi-ken, 471-8571 (JP); MA, Jing, Toyota-shi, Aichi-ken, 471-8571 (JP); ASAOKA, Takuya, Toyota-shi, Aichi-ken, 471-8571 (JP)
(74) Representative: Simmons & Simmons

(57) **Abstract**

A network node that configures a wireless communication network, includes a processor configured to execute: receiving a charging data request; and generating a charging data record in response to receiving the charging data request. The charging data record includes a data identifier of data provided by a data providing apparatus.

## Description

### BACKGROUND OF THE INVENTION

### 1. Field of the Invention

The present disclosure relates to a network node, an information processing system, an information processing method, and a non-transitory storage medium.

### 2. Description of Related Art

Japanese Unexamined Patent Application Publication No. 2008-242553 discloses that a server registers user information of a user mobile terminal participating in information provision, searches a user participating in the provision of information corresponding to an information type of information provision requested from a client mobile terminal, and transmits a request for information provision to the user terminal of the corresponding user. As a result, it becomes possible to collect information significant for the client that desires information provision.

### SUMMARY OF THE INVENTION

The present disclosure provides a technology capable of granting an incentive to a user that has contributed to data provision.

A network node according to a first aspect of the present disclosure is configures a wireless communication network. The network node includes a processor. The processor is configured to receiving a charging data request relating to a data providing apparatus; and generating a first charging data record in response to receiving the charging data request; and the first charging data record includes a first data identifier of first data provided by the data providing apparatus to the wireless communication network.

An information processing system according to a second aspect of the present disclosure includes: a network node; and a billing domain. The network node includes a first processor configured to execute: receiving a charging data request relating to a data providing apparatus; generating a first charging data record in response to receiving the charging data request; and transmitting the first charging data record to the billing domain. The billing domain includes a second processor configured to execute: receiving the first charging data record relating to a data providing apparatus; and demanding processing or paying processing based on the first charging data record; and the first charging data record includes a first identifier of first data provided by the data providing apparatus.

An information processing method according to a third aspect of the present disclosure is executed by a network node configuring a wireless communication network. The information processing method includes: receiving a charging data request; and generating a first charging data record in response to receiving the charging data request, wherein the first charging data record includes a first data identifier of first data provided by a data providing apparatus.

A non-transitory storage medium according to a fourth aspect of the present disclosure stores instructions that are executable by a computer and that cause the computer to perform the method according to the third aspect of the present disclosure.

According to the aspect of the present disclosure, it becomes possible to grant the incentive to the user that has contributed to the data provision and hence facilitate data provision that is more useful.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram exemplifying components of a wireless communication system;
FIG. 2 is a diagram describing a charging function (CHF);
FIG. 3A is a diagram showing a configuration example of an information processing apparatus capable of operating as an NF, an OAM terminal, and an external server;
FIG. 3B is a diagram showing a configuration example of an information processing apparatus capable of operating as a user terminal;
FIG. 4A is a sequence diagram relating to collection and provision of sensing measurement data;
FIG. 4B is a sequence diagram relating to collection and provision of the sensing measurement data; and
FIG. 5 is a flowchart relating to charging processing by a billing domain (BD).

### DETAILED DESCRIPTION OF EMBODIMENTS

### Overview

It can be conceived to collect data from a user terminal or other apparatuses and provide the data or data obtained by processing the data to another user terminal or other apparatuses. As one example, the user terminal may be a mobile communication terminal, and the collected data may be sensing measurement data measured by the user terminal. In such a system, whether a user provides data, and the provision frequency, the accuracy, the importance level, and the like of the data provided by the user, depend on the user. Therefore, it is desired to suitably grant an incentive to the user that has provided the data also in terms of improving the motivation for data provision.

One aspect of the present disclosure is a network node configuring a wireless communication network. The network node includes a processor. The network node is characterized in that: the processor executes: receiving a charging data request; and generating a charging data record in response to the reception of the charging data request; and the charging data record includes a data identifier of data provided by a data providing apparatus.

One example of the wireless communication network is a system using 5G, 4G, LTE, LTE-A, SUPER3G, IMT-Advanced, NR, and the like and a next-generation system expanded on the basis of the above. Other examples of the wireless communication network are IEEE802.11 (Wi-Fi (R)), IEEE802.16 (WiMAX (R)), IEEE802.20, UWB, Bluetooth (R), and other systems, and next-generation systems expanded on the basis of the above. The wireless communication network may be a system obtained by combining a plurality of systems with each other.

The charging data record is also referred to as a CDR. In this aspect, a data identifier of data provided by the data providing apparatus is included in the charging data record. A first charging data record is generated when data is provided by the data providing apparatus, and a second charging data record is generated when the data is used by a data using apparatus. Processing of paying an incentive to the user of the data providing apparatus in accordance with a usage record of the data becomes possible by generating charging data records in accordance with each of the data provision and the data usage and including the data identifier in those charging data records.

In this aspect, the generating the charging data record may include: generating a first charging data record including the data identifier of the data provided by the data providing apparatus and an identifier of the data providing apparatus; and generating a second charging data record including a data identifier of data used by a data using apparatus. It becomes possible to grant an incentive to the user that provides data in accordance with the usage record by generating the first charging data record and the second charging data record as above.

The second charging data record may further include the identifier of the data using apparatus. It becomes possible to demand a cost according to data usage from the user of the data using apparatus by including the identifier of the data using apparatus in the second charging data record.

The charging data record including the data identifier of the data provided by the data providing apparatus and the identifier of the data providing apparatus can be understood to be a charging data record relating to data provision (first charging data record). The charging data record including the data identifier of the data used by the data using apparatus (second charging data record) can be understood to be a charging data record relating to data usage. "The data identifier of the data provided by the data providing apparatus" (first data identifier) and "the data identifier of the data used by the data using apparatus" (second data identifier) may be the same or may be different as long as the correspondence relationship between the two can be grasped. It is simple for the first data identifier and the second data identifier to be the same when the data provided by the data providing apparatus is directly used by the data using apparatus, for example. When the data created on the basis of the data provided by the data providing apparatus is used by the data using apparatus, one or a plurality of first data identifiers may be associated to the second data identifier and the correspondence relationship may be recorded in the network node.

The processing of paying an incentive to the user of the data providing apparatus that has provided data becomes possible by including the data identifier of the data provided by the data providing apparatus and the identifier of the data providing apparatus in the charging data record. The processing of demanding a fee from the user of the data using apparatus that has used the data becomes possible by including the data identifier of the data used by the data using apparatus and the identifier of the data using apparatus in the charging data record. The processing of paying an incentive in accordance with the usage record of the data to the user of the data providing apparatus becomes possible as a result of both of the charging data record relating to the provision of the data and the charging data record relating to the usage of the data existing. When the processing of demanding a fee from the user of the data using apparatus is unnecessary, the identifier of the data using apparatus does not necessarily need to be included in the CDR relating to data usage generated in accordance with the data usage by the data using apparatus.

In this aspect, the data may be sensing measurement data obtained by being sensed by the data providing apparatus. The sensing measurement data may be raw data obtained by the data providing apparatus or may be data processed by the data providing apparatus or other apparatuses on the basis of the raw data. One example of the processed data is the type, the position, the size, the moving speed, and the like of an object detected by sensing.

In this aspect, the data identifier may be the identifier of the object included in the sensing measurement data. Regarding the identifier of the object, the same identifiers may be allocated to the same objects, or different identifiers may be allocated to the same objects for each measurement instance. The data identifier in the present disclosure can be understood to be the identifier of the sensing measurement.

In this aspect, each of the charging data request and the charging data record may include at least one of an importance level, a confidence level, or a rarity level of the data. As a result of the charging data record including those information, it becomes possible pay more incentives to the user that has provided data with a higher importance level, confidence level, or rarity level. Therefore, it becomes possible to facilitate the provision of data with a high importance level, confidence level, or rarity level.

In this aspect, the charging data record generated by the network node may be transmitted to a billing domain from the network node regularly or in response to a request. The billing domain performs at least one of the processing of paying an incentive to the user of the data providing apparatus or the processing of demanding a fee of data usage from the user of the data using apparatus on the basis of the charging data record obtained from the network node.

Another aspect of the present disclosure is an information processing system including: a network node; and a billing domain. The information processing system is characterized in that: the network node includes a processor that executes: receiving a charging data request; generating a charging data record in response to the reception of the charging data request; and transmitting the charging data record to the billing domain; the billing domain includes a processor that executes: receiving the charging data record; and demanding processing or paying processing based on the charging data record; and each of the charging data request and the charging data record includes an identifier of data provided by a data providing apparatus (UE) and an identifier of the data providing apparatus or an identifier of data used by a data using apparatus and an identifier of the data using apparatus.

In this aspect, the processor of the billing domain may execute at least either of the demanding processing with respect to the user of the data providing apparatus or the paying processing with respect to the user of the data using apparatus.

In this aspect, the processor of the billing domain may execute: receiving a first charging data record according to provision of data by the data providing apparatus and a second charging data record according to usage of data by the data using apparatus; and paying processing with a respect to a user of the data providing apparatus that has provided data of the data identifier included in the second charging data record based on the data identifier.

In this aspect, each of the charging data request and the charging data record may further include at least one of an importance level, a confidence level, or a rarity level of the data, and paying of an amount of money in accordance with at least one of the importance level, the confidence level, or the rarity level of the data may be performed in the paying processing.

Yet another aspect of the present disclosure is a method executed by a network node configuring a wireless communication network. The method includes: receiving a charging data request; and generating a charging data record in response to the reception of the charging data request. The method is characterized in that each of the charging data request and the charging data record includes a data identifier of data provided by a data providing apparatus (UE) and an identifier of the data providing apparatus or a data identifier of data used by a data using apparatus and an identifier of the data using apparatus.

The present disclosure further includes a computer program for causing a computer to execute each step of the method, and a computer program for realizing the network node or the information processing system by a computer. The present disclosure further includes a computer-readable storage medium having the computer program recorded thereon.

### Embodiment 1

An Embodiment of the present disclosure is described below with reference to the drawings. The embodiment below is merely an exemplification for description, and the present disclosure is not limited to the configuration of the embodiment. For example, an example in which the present disclosure is applied to a 5th generation mobile communication system is described below, but the present disclosure may be applied to a mobile communication system of a 4th generation or generations after the 5th generation. The present disclosure may be applied to a mobile communication system defined by those other than 3GPP or may be applied to a freely-selected wireless communication system or wired communication system other than the mobile communication system. It is presupposed that the data provided or used by the user terminal is sensing data measured by the user terminal. However, data to be provided and used may be sensing data measured by something other than the user terminal or may be freely-selected data other than the sensing data.

### Configuration of Information Processing System

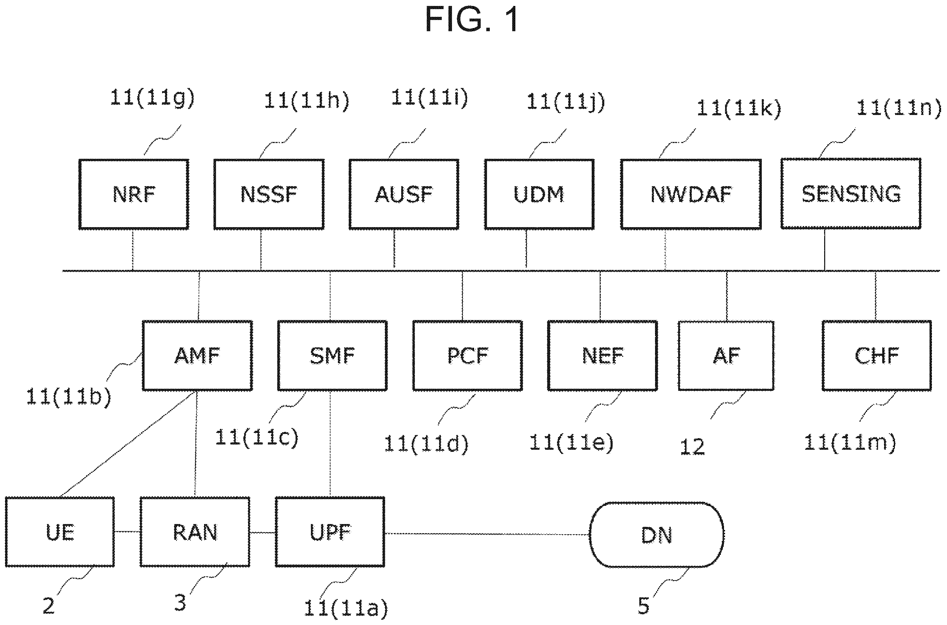

FIG. 1 shows components configuring a 5th generation mobile communication system (5G network). In FIG. 1, user equipment (UE) 2 is a terminal of a user (member). A radio access network (RAN) 3 is an access network to a 5G core network (5GC). The RAN 3 is configured by a base station (gNB). The 5G network has a 5G core network (5GC) and an access network ((R)AN), and a UE 2, a DN 5, and an AF 12 are connected to the 5G network. Each of NFs 11a to 11n is a function realized as a result of one or two or computers (information processing apparatuses) executing a program. However, a single computer may realize any two or more of the NFs 11a to 11n. Each of the NFs 11a to 11n can be referred to as a network node or a network component.

The 5GC is configured by a set of the components having a predetermined function called a network function (NF). FIG. 1 shows the following as the Nfs 11 configuring the 5GC. In FIG. 1, illustration is made by thick-line rectangular shapes.

### User plane function (UPF) 11a

Access and mobility management function (AMF) 11b
Session management function (SMF) 11c
Policy control function (PCF) 11d
Network exposure function (NEF) 11e
Network repository function (NRF) 11g
Network slice selection function (NSSF) 11h
Authentication server function (AUSF) 11i
Unified data management (UDM) 11j
Network data analytics function (NWDAF) 11k
Charging function (CHF) 11m
Sensing function (SENSING) 11n

The UPF 1 1a performs routing and forwarding of a user packet (a packet of a user plane transmitted and received by the UE 2), packet inspection, and QoS processing.

The AMF 11b is a location housing apparatus of the UE in the 5GC. The AMF 11b houses the RAN 3 and performs member authentication control, position (mobility) management of the UE 2, and the like.

The SMF 11c manages a protocol data unit (PDU) session and controls the UPF 11a to perform quality of service (QoS) control and policy control. The PDU session is a virtual communication channel for exchanging data between the UE 2 and the data network (DN) 5. The DN 5 is a data network (the Internet and the like) outside the 5GC.

The PCF 11d performs QoS control, policy control, charging control, and the like under the control of the SMF 11c. In the QoS control, the quality of communication of priority forwarding of a packet and the like is controlled. In the policy control, communication control such as charging, determination on whether the packet forwarding can be performed, and QoS based on network or member information is performed.

The NEF 11e has a role of mediating of communication between an external node and a node in a control plane.

The NRF 11g stores therein and manages information of the NFs (for example, AMF, SMF, and UPF) in the 5GC. The NRF 11g can reply with a plurality of NF candidates to an inquiry source in response to an inquiry according to an NF desired to be used.

The NSSF 11h has a function of selecting a network slice used by the member from network slices generated by network slicing. The network slice is a virtual network having specs depending on the purpose.

The AUSF 11i is a server for member authentication that performs member authentication under the control of the AMF 11b.

The UDM 11j holds member-related information and provides member information or acquires, registers, deletes, and changes the state of the UE 2.

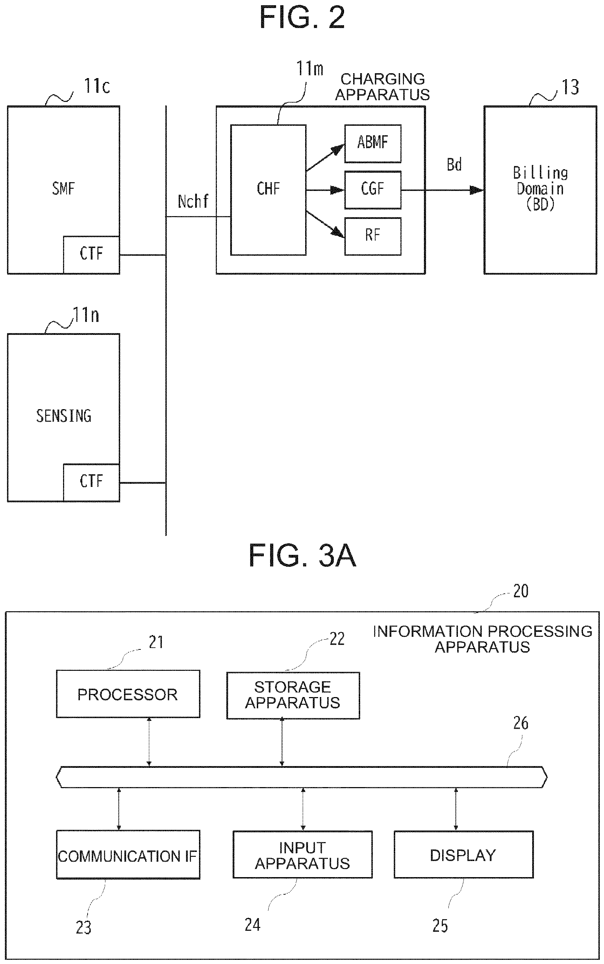

The NWDAF 11k has a function of collecting data from each NF 11, an OAM terminal 8 (FIG. 2), an external server, and the like and performing analysis. The NWDAF 11k is an NF that provides analytical information of the network.

The CHF 11m is a network node having a function of online charging and offline charging. The CHF 11m is connected to a network node (NF) having a charging trigger function (CTF). Details of the CHF 11m are described below.

The SENSING 11n performs a sensing service including collecting sensing information from the UE 2, the RAN 3 (base station (gNB)), or other nodes, and providing the collected sensing information to the UE 2 or other external systems (the AF 12, the DN 5, and the like). Details of the SENSING 11n are described below.

The AF 12 is an NF that provides an application service via the NRF 11g as a part of the 5GC or an NF that is outside the 5GC and provides an application service via the NEF 11e. The AF 12 performs processing using sensing data, for example. As one example, the AF 12 generates dynamic map information on the basis of sensing measurement data obtained from the SENSING 11. The UE 2 or an application program executed by the UE 2 may operate as the AF 12.

In the 5GC, a plurality of NFs of the same type may be prepared. For example, the NF 11 may be prepared for each data center (station). One NF 11 may be shared between data centers. The plurality of NFs 11 of the same type may be configured by one data center. The number of data centers, the number of the NFs 11, and the correspondence relationship between the NF 11 and the data center can be set, as appropriate.

FIG. 2 is a diagram describing the CHF 11m in more detail. The CHF 11m provides a service with use of an Nchf interface. CTFs included in the SMF 11c and the SENSING 11n can access the CHF 11m with use of the Nchf interface.

As shown in FIG. 2, the CHF 11m can communicate with a billing domain 13 (BD, demanding apparatus) with use of a charging gateway function (CGF). The CHF 11m may configure a charging apparatus by being combined with an account balance management function (ABMF) and a rating function (RF). In the example of FIG. 2, the CGF is included in the charging apparatus, but the CGF may be included in the billing domain or may be a network element independent of both of the charging apparatus and the billing domain.

The sensing unit (SENSING) 11n is a network node having a function of collecting sensing measurement data from the UE 2, performing analysis processing of the sensing measurement data, and providing the sensing data to the AF 12. "Sensing data" in the present disclosure is a term including at least either of sensing measurement data itself provided from the UE 2 or data based on the provided sensing measurement data (for example, data or an analytical result obtained by analyzing the sensing measurement data). The SENSING 11n includes a charging trigger function (CTF), and the CTF asks the CHF 11m to generate a CDR. The SENSING 11n accepts designation of sensing from the AF 12 that is a data request source, in particular, the specified NF 11 and the like via the NEF 11e and collects sensing information from the designated monitoring target, for example. Then, the SENSING 11n provides a notification regarding the collected sensing data to the AF 12 and the like for which designation has been accepted. The SENSING 11n can collect sensing measurement data from at least one of the AF 12 connected to the 5GC via the NEF 11e, the RAN 3 (gNB), the external server, the UE 2, and the NF 11 other than the specified NF 11 described above. The sensing service by the SENSING 11n can be performed by one of a subscribe/notify method and a request/response method (similar to the regulation in TS23.288 Chapter 6.1).

The billing domain 13 (BD) is a network node having a function of performing charging (billing) processing. "Charging" in the present disclosure is a term of a meaning including at least either of granting an incentive (paying a fee) or collecting a fee (demanding a fee). The BD 13 receives a CDR from the CHF 11m and performs charging mediation (billing mediation), charging (billing), and other processing (for example, statistical processing).

### Configuration of Information Processing Apparatus and Terminal

FIG. 3A is a diagram showing a configuration example of an information processing apparatus capable of operating as each of the NFs 11a to 11k, the OAM terminal, and the external server. In FIG. 3A, the information processing apparatus 20 can be configured as a dedicated or general-purpose information processing apparatus (computer) such as a personal computer (PC), a work station (WS), or a server machine. Needless to say, the information processing apparatus 20 may be an aggregation (cloud) of one or two or more computers.

The information processing apparatus 20 includes a processor 21, a storage apparatus 22, a communication interface 23 (communication IF 23), an input apparatus 24, and a display 25 serving as a processing unit or a control unit (controller) connected to each other via a bus 26.

The storage apparatus 22 includes a main storage apparatus and an auxiliary storage apparatus. The main storage apparatus is used as at least one of a storage region of a program and data, an expansion region of the program, a working region of a program, a buffer region of communication data, and the like. The main storage apparatus is configured by a random access memory (RAM) or a combination of a RAM and a read only memory (ROM). The auxiliary storage apparatus is used as a storage region of data and a program. A non-volatile storage medium is applied to the auxiliary storage apparatus. The non-volatile storage medium is a hard disk, a solid state drive (SSD), a flash memory, or an electrically erasable programmable read-only memory (EEPROM), for example. The storage apparatus 22 can include a drive apparatus of a disc recording medium.

The communication IF 23 is a circuit that performs communication processing. For example, the communication IF 23 is a network interface card (NIC). The communication IF 23 may be a wireless communication circuit that performs wireless communication (5G, a wireless LAN (Wi-Fi (R)), BLE, and the like). The communication IF 23 may be a combination of a circuit that performs wired communication processing and a wireless communication circuit.

The input apparatus 24 includes a key, a button, a pointing device, a touch screen, and the like and is used in the input of information. The display 25 is a liquid crystal display, for example, and displays information and data.

The processor 21 performs various processing by executing various programs stored in the storage apparatus 22. When the processor 21 executes the programs stored in the storage apparatus 22, the information processing apparatus 20 can operate as each of the NFs 11a to 11k, the OAM terminal 8, and external servers 12a and 12b.

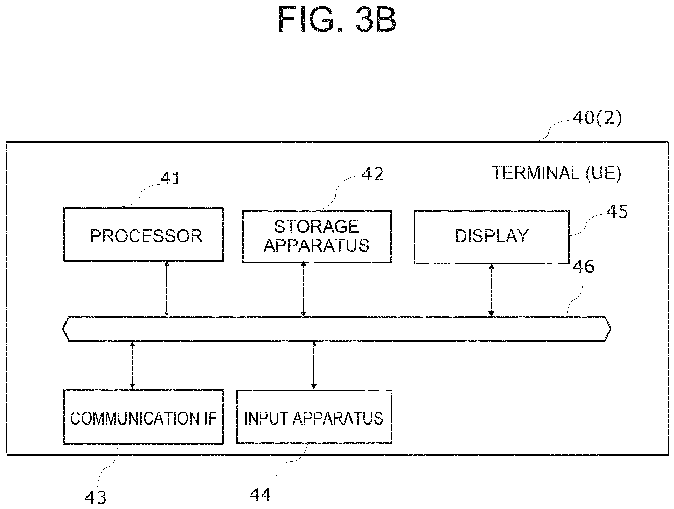

FIG. 3B is a diagram showing a configuration example of a terminal 40 operatable as the UE 2. The terminal 40 includes a processor 41, a storage apparatus 42, a communication interface 43 (communication IF 43), an input apparatus 44, and a display 45 connected to each other via a bus 46. As the processor 41, the storage apparatus 42, the communication IF 43, the input apparatus 44, and the display 45, those similar to the processor 21, the storage apparatus 22, the communication IF 23, the input apparatus 24, and the display 25 can be used. Therefore, description of the processor 41, the storage apparatus 42, the communication IF 43, the input apparatus 44, and the display 45 is omitted.

The processors 21 and 41 are central processing units (CPUs), for example. The CPU is also referred to as a microprocessor unit (MPU). The processors 21 and 41 may have a single processor configuration or a multiprocessor configuration. A single physical CPU connected by a single socket may have a multicore configuration. The processors 21 and 41 may include arithmetic units having various circuit configurations such as a digital signal processor (DSP) or a graphics processing unit (GPU). The processors 21 and 41 may have a configuration that works together with at least one of an integrated circuit (IC), other digital circuits and analog circuits, and the like. The integrated circuit includes an LSI, an application specific integrated circuit (ASIC), a programmable logic device (PLD), and the like. The PLD includes a field-programmable gate array (FPGA), for example. The processors 21 and 41 also include a so-called microcontroller (MCU), system-on-a-chip (SoC), system LSI, or chipset, for example.

### Operation Example: Data Collecting and Providing Processing

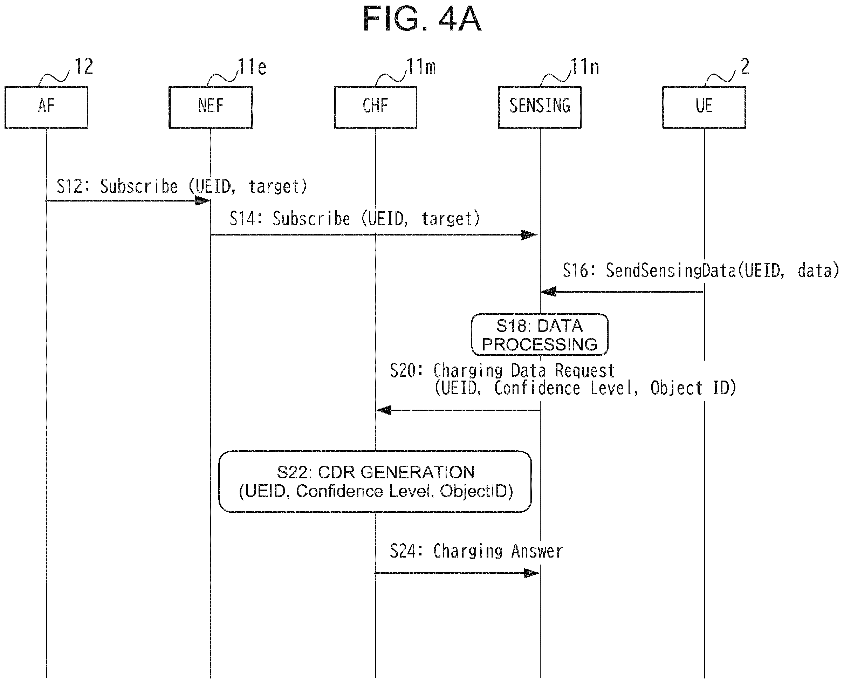

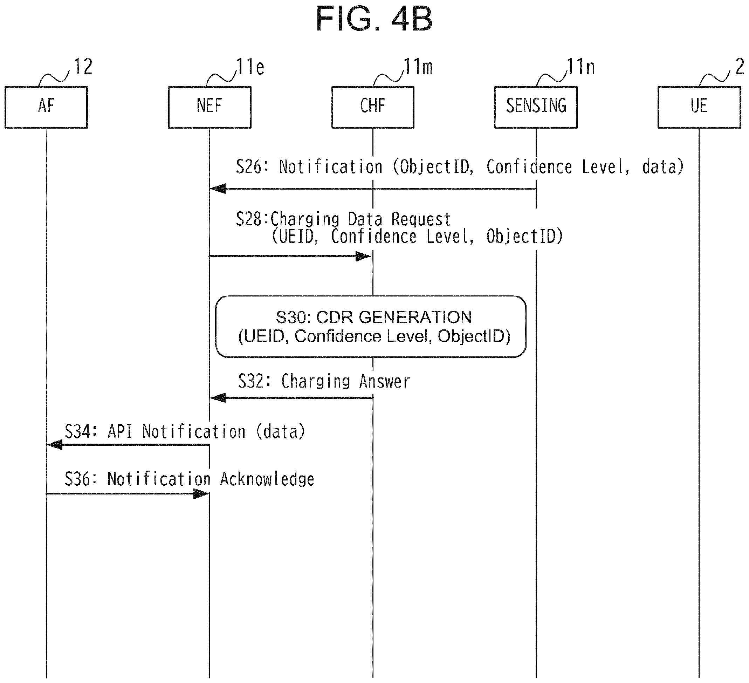

FIG. 4A to FIG. 4B are sequence diagrams showing examples of operation relating to collecting and providing sensing data in an aspect of the present disclosure. Each of the sequence diagrams shown here is one example and may include processing other than those shown, some of the shown processing may be omitted, or the execution order of the shown processing may be changed. In FIG. 4A to FIG. 4B, an example of providing data by a subscribe/notify method is described, but data may be provided with use of a request/response method. In FIG. 4A to FIG. 4B, offline charging is presupposed but online charging may be employed.

In this operation example, the UE 2 that transmits sensing data to the SENSING 11n is one example of a "data providing apparatus", and the AF 12 that is provided with the sensing data from the SENSING 11n is one example of a "data using apparatus".

In Steps S12 to S14, the AF 12 that uses the sensing data performs subscription (subscribe) of the sensing data with respect to the SENSING 11n via the NEF 11e. A subscription message includes the identifier of the AF 12 and a parameter for specifying the sensing data of the subscription target. The identifier (AF ID) of the AF 12 (external server) is used as an identifier (UE ID) for specifying a data user (subscriber) in the data collecting and providing processing. The parameter for specifying sensing measurement data of a subscription target may be expressed as conditions relating to the type, the existing position, the moving speed, the size, and the like of an object, for example. The subscription message from the AF 12 is transmitted to the SENSING 11n via the NEF 11e. In FIG. 4A, the parameters included in the subscription messages in S12 to S14 are the same, but the NEF 11e may change the parameters included in the subscription messages, for example.

In Step S16, the user terminal 2 that provides sensing measurement data transmits the sensing measurement data to the SENSING 11n. In a data transmission message, an identifier of the UE 2 and the sensing measurement data are included. Here, the sensing measurement data may be raw data of the sensing measurement performed by the UE 2 or may be data processed from the raw data.

In Step S18, the SENSING 11n performs data processing of the sensing measurement data received from the UE 2. An example of the data processing is processing of specifying the target of sensing measurement included in the sensing measurement data. The specification of the target includes object recognition (recognition of the object type), position specification, size specification, the moving speed specification, and the like. The SENSING 11n also obtains an object identifier (object ID) that specifies the target included in the sensing measurement data. For example, each time sensing measurement data is obtained, the SENSING 11n allocates a unique identifier for an object obtained from the sensing measurement data.

The SENSING 11n may also obtain a confidence level of the object recognition. The object recognition can be typically performed with use of a learning model (object recognition means) obtained by machine learning. With a result of the object recognition, the learning model also outputs a confidence level of the result. The confidence level output from the learning model or a value based on the confidence level is equivalent to the confidence level of the object recognition described above. The SENSING 11n may obtain a rarity level (rarity, scarcity) of the sensing measurement data. The rarity level can be determined by various viewpoints. As one example, it can be conceived to determine objects with less frequency of appearance or frequency of detection to have a higher rarity level, and determine sensing measurement data in positions and/or time periods in which the number or frequency by which sensing measurement data is obtained is less to have a higher rarity level. For example, the SENSING 11n counts the type of the objects included in the sensing measurement data, the position of the measurement target, the time periods, and/or the like that have been obtained so far and calculates the rarity level of each sensing data in accordance with the number of data or the appearance frequency. The SENSING 11n may obtain an importance level of the sensing data. The importance level may be determined as an average or a total, for example, by combining the confidence level and the rarity level, for example, or may be determined on the basis of other standards.

The SENSING 11n saves the result of the data processing in the storage apparatus.

In Step S20, the SENSING 11n transmits a charging data request to the CHF 11m. The charging data request includes information with which it can be specified that the charging data request relates to the provision of data. The charging data request includes the identifier of the UE 2 that has provided data, the confidence level of the sensing data, and the identifier of the object included in the sensing data.

In Step S22, the CHF 11m generates a charging data record (CDR) in response to the reception of the charging data request. The CDR includes information with which it can be specified that the CDR relates to the data provision from the UE 2. The CDR includes the identifier of the UE 2 that has provided data, the confidence level of the sensing data, and the identifier of the object included in the sensing data. The generated CDR is saved in the storage apparatus in the CHF 11m.

In Step S24, the CHF 11m transmits a notification (charging answer) indicating that the generation of the CDR has completed to the SENSING 11n.

In Step S26, the SENSING 11n transmits the sensing data to the NEF 11e (notification). The processing in Step S26 is executed in response to the SENSING 11n acquiring the sensing data of a target for which the NEF 11e has applied for a subscription. The notification message includes an object identifier, a confidence level of a sensing data, and the sensing data. The sensing data transmitted to the NEF 11e may be a result obtained by the SENSING 11n by data processing instead of or in addition to the sensing measurement data provided from the UE 2.

In Step S28, the NEF 11e transmits a charging data request to the CHF 11m. The charging data request includes an identifier of the AF 12 that is a data providing destination (subscriber), the confidence level of the sensing data, and the identifier of the object included in the sensing data.

In Step S30, the CHF 11m generates a charging data record (CDR) in response to the reception of the charging data request. The CDR includes information with which it can be specified that the CDR relates to data usage by the AF 12. The CDR includes an identifier of the AF 12 that is the data providing destination, the confidence level of the sensing data, and the identifier of the object included in the sensing data. The generated CDR is saved in the storage apparatus in the CHF 11m.

The identifier of the AF 12 that is the data providing destination is included in the CDR in order to demand a cost from the user of the AF 12. When a cost is not demanded from the user of the AF 12, specification of the user that has used the data is unnecessary, and hence the data usage CDR does not necessarily need to include the identifier of the user.

In Step S32, the CHF 11m transmits a notification (charging answer) indicating that the generation of the CDR has completed to the SENSING 11n.

In Step S34, the NEF transmits the sensing measurement data to the AF 12 (API notification). The message at least includes the sensing data.

In Step S36, the AF 12 transmits a notification indicating that the sensing data is received to the NEF (notification acknowledge).

### Operation Example: Charging Processing

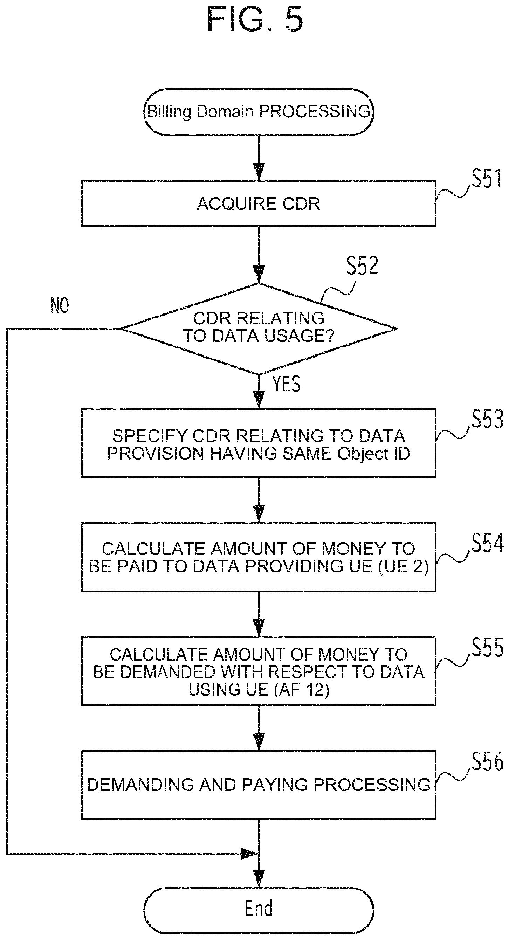

FIG. 5 is a flowchart showing a flow of the charging processing relating to provision and usage of the sensing measurement data executed by the BD 13 (billing domain; charging apparatus). The example of FIG. 5 is the flowchart of the charging processing when the amount of money of the incentive to be paid to the user of the data providing UE is determined in accordance with a usage record of the data.

In Step S51, the BD 13 acquires a CDR from the CHF 11m. The processing of providing the CDR to the BD 13 from the CHF 11m, in other words, receiving the CDR from the CHF 11m by the BD 13 may be regularly performed or may be performed on the basis of a transmission request from the BD 13.

Processing in Step S52 and after Step S52 below is performed for each acquired CDR.

In Step S52, the BD 13 determines whether the CDR relates to data usage. When the CDR relates to data usage, the processing proceeds to Step S54. The CDR relating to data usage is also referred as a data usage CDR below for the purpose of illustration.

In Step S53, the BD 13 specifies a CDR having an object identifier (object ID) that is the same as an object identifier included in the CDR that is currently being processed out of acquired CDRs. The CDR relating to data provision is also referred as a data provision CDR below for the purpose of illustration. By specifying the data provision CDR, the UE 2 that has provided data used by the AF 12 (or data used in the processing of the data) can be grasped. Instead of searching the corresponding data provision CDR from the acquired CDR, the BD 13 may inquire the CHF 11m for a corresponding CDR at the time point and acquire the CDR.

In Step S54, the BD 13 calculates the amount of money to be paid to the UE 2 that has provided the data. The amount of money to be paid may be determined in accordance with the confidence level of the provided sensing data and specifically the confidence level included in the data provision CDR, for example. The amount of money to be paid may be determined on the basis of other parameters such as the importance level and the rarity level of the sensing data. The amount of money to be paid may be determined on the basis of a contribution level of the UE 2 in data provision to the AF 12. The contribution level of the UE 2 may be determined by a contribution rate of the data provided by the UE 2 out of the data used in the creation of the data provided to the AF 12, for example. The contribution rate may be determined as a rate of sensing data by the UE 2 out of the sensing data used in data creation. This rate may be a simple rate based on numbers, or may be a weighting rate (weight ratio) using weight based on at least one of the confidence level, the rarity level, and the importance level.

In Step S55, the BD 13 calculates the amount of money to be demanded from the user of the AF 12 that has used data. The amount of money to be demanded may be determined in accordance with the confidence level of the sensing data or may be a fixed amount of money, for example.

In Step S56, the BD 13 executes the paying processing with respect to the UE 2 and the demanding processing with respect to the AF 12.

The amount of money of the incentive to be paid may be determined by procedures other than the above. For example, an incentive may be paid when the provided data satisfies a predetermined standard regardless of the data usage record. In this case, the amount of money to be paid may be a fixed amount or may be a variable amount in accordance with the degree of conformance with the standard.

### Advantageous Effects of Present Embodiment

According to the present embodiment, a usage record of data and a UE that has provided sensing data are linked to each other by storing an object identifier in a CDR relating to the provision and the usage of the sensing measurement data. Therefore, it becomes possible to pay an incentive to the data providing UE (UE 2) in accordance with the usage record of the sensing data. By determining the amount of the incentive (amount of money to be paid) in accordance with the confidence level of the sensing measurement data, the motivation for the user of the UE 2 to provide sensing measurement data with a higher confidence level improves.

By the above, more sensing measurement data with a higher confidence level is provided from the user terminal. When more sensing measurement data with a higher confidence level is obtained, a service that is more useful can be provided to the AF 12, and the convenience for the user that uses the service is also obtained.

### Other Modified Examples

The embodiment described above is merely one example, and the present disclosure may be embodied by being changed, as appropriate, without departing from the gist of the present disclosure.

In the embodiment described above, the data provided and used by the user terminal is sensing data measured by the user terminal. However, the data to be provided and used may be sensing data measured by those other than the user terminal or may be freely-selected data other than the sensing data.

Data is provided to the user terminal by the subscribe/notify method in the embodiment described above, but data may be provided to the user terminal by a request/response method.

An incentive is granted to data provision and a cost is demanded for data usage in the embodiment described above, but a cost does not necessarily need to be demanded for data usage. When a cost is not demanded for data usage, the generation of a CDR relating to data usage (Step S30) does not necessarily need to be performed, but a CDR relating to data usage may be generated in order to grant an incentive in accordance with a usage record of the data. When an incentive in accordance with the usage record of the data is simply granted, the specification of the user terminal that has used the data is unnecessary, and hence the identifier of the second user terminal does not necessarily need to be included in the data usage CDR.

It is also possible to realize the present disclosure by supplying a computer program in which the functions described in the embodiment are implemented to a computer and causing one or more processors of the computer to read out and execute the program. Such a computer program may be provided to the computer by a non-transitory computer-readable storage medium connectable to a system bus of the computer or may be provided to the computer via a network. Examples of the non-transitory computer-readable storage medium includes any type of disks or discs such as a magnetic disk (a floppy (R) disk, a hard disk drive (HDD), and the like) and an optical disc (a CD-ROM, a DVD disc, a Blu-ray disc, and the like), a read-only memory (ROM), a random access memory (RAM), an EPROM, an EEPROM, a magnetic card, a flash memory, an optical card, and any type of medium suitable for storing therein an electronic instruction, for example.

## Claims

1. A network node that configures a wireless communication network, comprising a processor configured to execute:
receiving a charging data request relating to a data providing apparatus; and
generating a first charging data record in response to receiving the charging data request, wherein the first charging data record includes a first data identifier of first data provided by the data providing apparatus to the wireless communication network.

2. The network node according to claim 1, wherein the generating the charging data record includes:
generating the first charging data record including the first data identifier of the first data provided by the data providing apparatus and an identifier of the data providing apparatus; and
generating a second charging data record including a second data identifier of second data used by a data using apparatus.

3. The network node according to claim 2, wherein the second charging data record further includes an identifier of the data using apparatus.

4. The network node according to any preceding claim, wherein the first data is sensing data obtained by performing sensing measurement by the data providing apparatus.

5. The network node according to claim 4, wherein the first data identifier is an identifier of an object specified by the sensing data.

6. The network node according to any preceding claim, wherein each of the charging data request and the first charging data record further includes an importance level of the data.

7. The network node according to any preceding claim, wherein each of the first charging data request and the first charging data record further includes a confidence level of the data.

8. The network node according to any preceding claim, wherein each of the first charging data request and the first charging data record further includes a rarity level of the data.

9. The network node according to any preceding claim, wherein the processor is configured to transmit the first and/or second charging data record to a billing domain regularly or in response to a request.

10. An information processing system, comprising:
a network node; and
a billing domain, wherein
the network node includes a first processor configured to execute
receiving a charging data request relating to a data providing apparatus,
generating a first charging data record in response to receiving the charging data request, and
transmitting the first charging data record to the billing domain,
the billing domain includes a second processor configured to execute
processing of receiving the first charging data record, and
demanding processing or paying processing based on the first charging data record, and
the first charging data record includes a first data identifier of first data provided by the data providing apparatus.

11. The information processing system according to claim 9, wherein the second processor of the billing domain is configured to execute paying processing for a user of the data providing apparatus.

12. The information processing system according to claim 10 or claim 11, wherein the second processor of the billing domain is configured to execute:
processing of receiving the first charging data record according to provision of the first data by the data providing apparatus and a second charging data record according to usage of second data by a data using apparatus; and
based on the second data identifier included in the second charging data record, the processing of paying for the user of the data providing apparatus that has provided second data of the second data identifier.

13. The information processing system according to any of claims 10 to 12, wherein:
each of the charging data request and the first charging data record further includes at least one of an importance level, a confidence level, or a rarity level of the data; and
paying of an amount of money in accordance with at least one of the importance level, the confidence level, or the rarity level of the data is performed in the processing of paying.

14. An information processing method executed by a network node configuring a wireless communication network, the information processing method comprising:
receiving a charging data request; and
generating a first charging data record in response to receiving the charging data request, wherein the first charging data record includes a first data identifier of first data provided by a data providing apparatus.

15. A non-transitory storage medium storing instructions that are executable by a computer and that cause the computer to perform the method according to claim 16.
